Europäisches Patentamt

(19) European Patent Office

Office européen des brevets

(11) Publication number: **0 139 643**
**B1**

# EUROPEAN PATENT SPECIFICATION

(45) Date of publication of patent specification: **29.11.89**

(21) Application number: **83901565.8**

(22) Date of filing: **21.04.83**

(86) International application number:
**PCT/US83/00604**

(87) International publication number:
**WO 84/04402 08.11.84 Gazette 84/26**

(51) Int. Cl.⁴: **G 02 F 1/13, G 02 F 1/137, G 01 J 3/12**

(54) **LIQUID CRYSTAL TUNED BIREFRINGENT FILTER.**

(43) Date of publication of application:
**08.05.85 Bulletin 85/19**

(45) Publication of the grant of the patent:
**29.11.89 Bulletin 89/48**

(84) Designated Contracting States:
**DE FR GB NL SE**

(56) References cited:
**EP-A-0 052 000
DE-A-2 445 325
DE-A-2 617 924
FR-A-2 158 559
FR-A-2 238 200
US-A-2 600 962
US-A-4 272 195
US-A-4 394 069**

**Electronics Letters, vol.11, no.19, 18 september
1975 (Hitchin, Herts, GB),
H.A.TARRY:"Electrically tunable narrowband
optical filter", pages 471-472
Journal of Applied Physics, vol.44, no.11,
november 1973 (New York, US), T.J.
SCHEFFER:"New multicolour liquid crystal
displays that use a twisted nematic electro-
optical cell", pages 4799-4803**

(73) Proprietor: **BECKMAN INSTRUMENTS, INC.
Executive Office 2500 Harbor Boulevard Box
3100
Fullerton California 92634 (US)**

(72) Inventor: **KAYE, Wilbur, I.
3607 Surfview Lane
Corona del Mar, CA 92625 (US)**

(74) Representative: **Arthur, John William et al
FITZPATRICKS 4 West Regent Street
Glasgow G2 1RS Scotland (GB)
Japanese Journal of Applied Physics, vol.13,
no.3, march 1974 (Tokyo, JP), S. SATO et
al.:"Frequency colour display by nematic liquid
crystals", pages 559-560**

**Applied Physics, vol. 11, no.1, september 1976
(Berlin, DE), K. FAHRENSCHON et
al.:"Deformation of a pretilted nematic liquid
crystal layer in an electric field", pages 67-74**

**Journal of the Optical Society of America,
vol.37, no.10, october 1947,New York, US, B.
BILLINGS:"A tunable narrow-band optical
filters"**

Courier Press, Leamington Spa, England.

(56) References cited:
**Institute of Physics Conference Series, no.40, edited by E.A.A.S.H., 1977, The Institute of Physics (Bristol and London, GB), T.J. SCHEFFER:"Electrically controlled colour filters using cally controlled colour filters using liquid crystals", pages 65-86**

## Description

The present invention relates to a liquid crystal tuned birefringent filter and, more particularly, to an electrically tunable filter including stacked birefringent liquid crystal cells.

The principle of the birefringent filter was first suggested by the French astronomer Berhard Lyot in 1933. Lyot constructed filters having a half-bandwidth of about five angstroms and used them for photographing the solar corona in monochromatic light. The Lyot-type filter consists of a stack of elements, each of which consists of a birefringent cell, i.e. a retarder, and a polarizer. For a further discussion of a Lyot-type filter, reference should be made to U.S. Patent No. 2,718,170, issued September 20, 1955 to Bernard Lyot and entitled Slitless Spectrophotometer.

Birefringent cells have the property that their refractive index, hence the velocity of propagation of light therethrough, varies with direction through the element. Such materials are said to be anisotropic. When a polarized light beam passes through a birefringent cell, the beam breaks into two orthogonally polarized components called the ordinary and extraordinary rays, which propagate with velocities which are inversely proportional to the two refractive indices existing in the directions of beam propagation. These two beams emerge from the birefringent cell with a difference in phase angles. The resultant beam, in general, is said to be elliptically polarized.

When the elliptically-polarized light beam passes through a polarizer, only those components of the beam with their electric vectors in the plane of the polarization of the polarizer pass therethrough. The two component beams then interfere and the intensity of the resultant beam is a function of the relative phase angles of the component beams. The greater the product of birefringence and optical path through the birefringent material, the greater the phase angle shift.

If the slow ray emerges with its phase angle 90° behind the fast ray, the two beams totally interfere and the intensity of the beam falls to zero. If the slow ray emerges with its phase angle 180° or some multiple of 180° behind the fast ray, the two rays interfere constructively and there is no diminution of beam intensity.

Assuming that the optic axis of a birefringent cell has been oriented 45° from the parallel planes of polarization of polarizers on opposite sides thereof, the phase angle difference between the component beams is a function of the difference in refractive indices in the orthogonally propagating beam directions, the birefringence, $\Delta n$, the thickness, d, of the birefringent material, and the wavelength, $\lambda$, of light. Thus, the relative phase angle is:

$$\alpha = \frac{2\pi d \Delta n}{\lambda}. \qquad (1)$$

The intensity of light passing through the second polarizer, neglecting any absorption losses, is given by the equation:

$$I = 1 - \sin^2 (\pi \Delta n d / \lambda). \qquad (2)$$

The product $\Delta n d$ is called the retardation. When the retardation equals $M\lambda$, where M is an integer, the intensity equals unity. When the retardation equals $N\lambda/2$, where N is an odd integer, the ordinary and extraordinary rays destructively interfere and the intensity falls to zero. If $\Delta n d$ is kept constant while wavelength changes, intensity will vary in a cyclic manner. The value of M at the design wavelength $\lambda$ is called the order of the element.

According to Lyot, a filter is constructed by using a plurality of birefringent elements, the thicknesses of which increase in a geometrical progression whose ratio is two. The filter elements of Lyot were made of quartz and had their faces parallel to each other and normal to the light rays and their optical axes parallel to one another and forming 45° angles with the planes of polarization of polarizers sandwiched between each cell. By passing a beam of light through such a stack of birefringent elements, each of which produces a different order of retardation, but subject to the restriction that the retardation of each element be integral multiples of a design wavelength, a narrow band pass filter can be constructed, suitable for use in high resolution applications.

The disadvantage of the filter described by Lyot is that it is very expensive and was designed for use at a single frequency, having very limited turnability. On the other hand, many applications require the use of tunable narrow bandwidth filters and attempts have been made to make widely tunable Lyot filters. Lyot, himself, suggested that it was possible to cause the center of the transmitted band to be movable by changing the temperature of the filter and this did indeed provide limited tunability.

If one changes the retardation by changing either or both birefringence, $\Delta n$, or thickness, d, the wavelength at which the fringe maxima occur will change. With most birefringent materials, such as quartz, calcite or mica, it is far easier to change thickness than to change birefringence. The Babinet-Soleil compensator is a commonly used birefringent element consisting of two quartz wedges. In sliding past each other, the effective thickness changes and with it the retardation. It is also possible to change the birefringence in some materials. This has been accomplished by utilizing stressed polymer films as variable retarders. A variable birefringence can also be induced in almost any liquid by applying a strong electric field (usually requiring thousands of volts). The Kerr cell is such a device. A variable birefringence can also be induced in certain ferroelectric crystals by applying a strong field.

All of these filters are either large, overly complex, or very expensive. The result has been that while quite a few versions of the Lyot filter have been developed over the years, they have all been very limited in application to situations where the high expense was acceptable. A relatively low cost Lyot filter, having useful levels of resolution, low stray-light ratios, and wide degrees of tunability has been unavailable heretofore.

According to the present invention, a moderately narrow band, tunable, birefringent filter is disclosed using zero-twist, nematic-phase, liquid crystal cells as variable retarders in Lyot-type arrangements. These filters can achieve analytically useful levels of resolution and stray-light ratios for costs that are competitive with prism and grating monochromators. Moreover, these birefringent filters can be tuned and/or rendered opaque by applying appropriate voltages to the cells thereof. Thus, a double-beam instrument can be constructed with no moving parts. Power requirements for the filter are negligible and a useful filter can be designed to occupy a volume less than one cubic inch (16 cm³). These properties render such a filter ideally suited to microprocessor control.

Briefly, such a filter comprises a plurality of birefringent liquid crystal cells arranged in a stack, each of the cells including a zero-twist, nematic-phase liquid crystal material with a positive dielectric anisotropy and a polarizer between each cell and before and after the first and last cells, respectively, in the stack. A collimated beam of light is directed through the stack of cells and the emergent beam is utilized and detected. By the careful selection of the orders of the cells, the filter can be made highly transmissive at a single wavelength and can have a relatively high level of resolution and a low stray-light ratio. All of the cells can be electrically connected in parallel and the transmittance wavelength varied over a relatively wide range by the application of a voltage to each of the cells. One of the cells can be used as a modulator to alternately render the cell transmissive and opaque.

There is known, from US—A—2600962, a tunable light filter adapted to be positioned in the path of the beam of light, comprising:

a plurality of birefringent liquid crystal cells arranged in a stack, each of said cells including an electro-optic material a polarizer between at least some of the cells and before and after the first and last cells, respectively, in said stack, whereby said beam of light passes sequentially through all of said cells and said polarizers; and

means for applying a voltage to at least some of said cells to vary the birefringence thereof, wherein at least some of said cells produce different orders of retardation than others of said cells, and wherein at some voltage applied to each of said cells the retardation of all of said cells are integral multiples of a given wavelength, the orders of retardation of said cells varying from a lowermost order to an uppermost order.

According to the present invention, the electro-optic material in such a filter is a zero-twist nematic-phase liquid crystal material with a positive dielectric anisotropy, and the orders of those of said cells having a relatively low order vary in an approximately arithmetic progression, and the orders of those of said cells having a relatively high order vary in an approximately geometric progression.

There is thus provided a tunable light filter having enhanced performance in terms of tunability, resolution and stray-light ratio.

Other objects, features, and attendant advantages of the present invention will become apparent to those skilled in the art from a reading of the following detailed description of the preferred embodiments constructed in accordance therewith, taken in conjunction with the accompanying drawings, wherein like numerals designate like parts in the several figures and wherein:

Brief description of the drawings

Figure 1 is a schematic cross-sectional view of a liquid crystal cell;

Figures 2(a)—2(d) are a series of waveforms useful in explaining the operation of a Lyot-type filter;

Figure 3 is a schematic cross-sectional view of a single-beam instrument utilizing a filter constructed in accordance with the teachings of the present invention;

Figure 4 is a schematic cross-sectional view of a double-beam filter constructed in accordance with the teachings of the present invention; and

Figures 5—11 are schematic cross-sectional views of a variety of double-beam instruments using the filter system of Figure 4.

·According to Lyot, by stacking a series of birefringent elements, each of which produces a different order of retardation, but subject to the restriction that the retardation of each element be integral multiples of a design wavelength, the stack will have a high transmittance at this wavelength and a low transmittance at nearby wavelengths. According to Lyot, the thicknesses of the elements increase in a geometrical progression whose ratio equals two. Such a filter and the results thereof are described in U.S. Patent No. 2,718,170.

It is the teaching of the present invention to utilize nematic-phase, zero-twist liquid crystal cells as the retarders of a Lyot-type filter. When so used, the filter becomes tunable over a relatively wide range by the simple expedient of changing the voltages applied to the cells. However, before describing the application of the liquid crystal cell to a Lyot-type filter, it becomes necessary to understand the applicable parameters of the cell itself and the considerations involved in making a cell suitable for use in a Lyot-type filter.

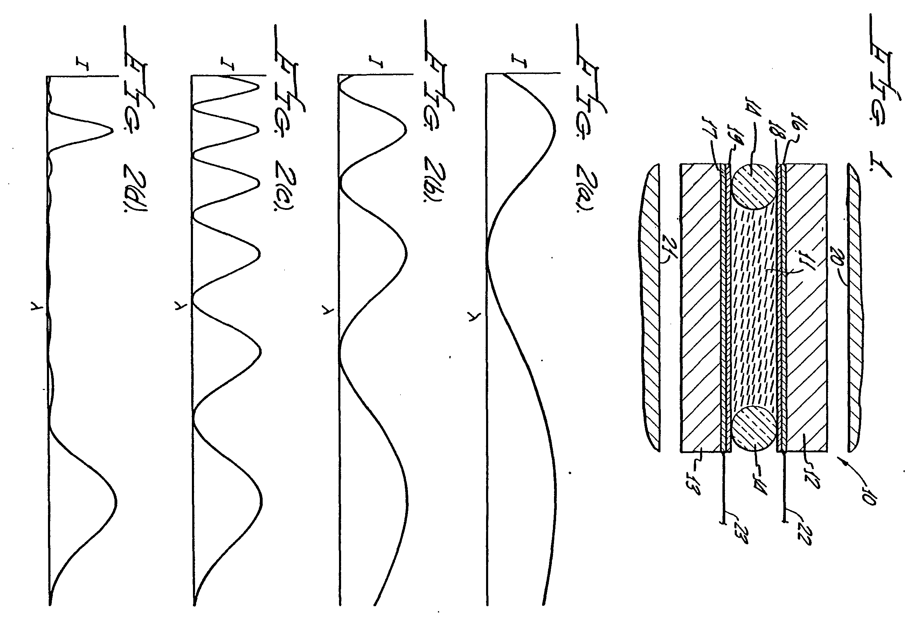

Referring now to the drawings and, more particularly, to Figure 1 thereof, there is shown a liquid crystal cell, generally designated 10. Cell 10 consists of a thin layer of liquid crystal material 11 sandwiched between first and second transparent plates 12 and 13 which are preferably made from glass. The spacing between plates 12 and 13, and therefore, the thickness of the liquid crystal layer is determined by suitable spacers, preferably plural glass fibers 14. The inside surfaces of plates 12 and 13 are coated with transparent conducting layers 16 and 17, respectively, and transparent alignment layers 18 and 19, respectively. Conducting layers 16 and 17 are connected to electrical leads 22 and 23, respectively.

For use with a Lyot-type filter, the liquid crystal material 11 is of the nematic-phase type with a positive dielectric anisotropy. The most important properties of the liquid crystal material 11 are absorption, birefringence, viscosity, dielectric anisotropy, and temperature range of the nematic phase. A variety of suitable materials are known to those skilled in the art. A mixture of trans cyano, alkyl biphenyl homologues is one of the most widely used materials for liquid crystal displays. Another available material is a pure trans cyano, propyl phenyl cyclohexane. Another available material is a eutectic mixture of propyl, pentyl, and heptyl cyano phenyl cyanohexane in the mole ratio 2.1 to 1.6 to 1.

Ideally, one would like a liquid crystal material to exhibit negligible absorption, high birefringence, low viscosity, high dielectric anisotropy, and a wide temperature range of the nematic order. However, there are theoretical reasons why improving one parameter necessarily impairs another.

Considering the property of absorption, it should be obvious that a liquid crystal mixture can be used in a birefringent filter only within a wavelength interval where it is acceptably transparent. Not so obvious is the limitation on the dichroism of the liquid crystal material 11. Dichroism is defined as the difference in absorbance for the ordinary and extraordinary beams and operates as a limit on the short wavelength behavior of a birefringent element. Dichroism results in an unequal intensity of ordinary and extraordinary rays emerging from the liquid crystal cell and incident on a polarizer. Therefore, these rays can never totally interfere. Consequently, the amplitudes of oscillations in the retardation spectra are reduced. Dichroism is implicit in liquid crystal molecules. The molecular structure responsible for the refraction anisotropy and dielectric anisotropy should be expected to produce dichroism. Furthermore, the higher the birefringence, the higher the dichroism to be expected.

Just how much dichroism can be tolerated in any given application is a factor which needs to be considered. The dichroism will always lower the retardation contrast most in the thickest birefringent cell. Since dichroism increases with increasing birefringence, obviously a compromise must be made in selecting a given liquid crystal material.

Considering the property of birefringence, this property is defined as the difference between the refractive indices measured with rays whose E vectors are parallel and perpendicular to the optic axis of the liquid crystal cell. It is appropriate to differentiate between two types of birefringence,

the principal birefringence, $\Delta n$, which has the above definition, and the apparent birefringence, $\Delta n'$, which is a function of $\Delta n$, applied voltage, and the tilt of the liquid crystal director relative to the cell plates, caused either by the electric field or the wall forces, as will be described more fully hereinafter. In any event, the apparent birefringence can be calculated from a spectrum obtained when placing cell 10 between parallel polarizers with the molecular director, defined by layers 18 and 19, in a plane 45° to the beam plane of polarization. Spectra so obtained are herein called retardation spectra.

The equation for the normalized (corrected for absorption and reflection losses) transmittance, $T_R$, as a function of wavelength, $\lambda$, is:

$$T_R = 1 - \sin^2{(\pi\Delta n'd/\lambda)}. \qquad (3)$$

Maxima will occur when $\Delta n'd/\lambda$ equals M, and minima will occur when $\Delta n'd/\lambda$ equals $(2N-1)/2$, where M and N are integers.

The order of the retardation is defined and described by M. This order is easily identified by applying voltage to the cell. Sixteen volts usually suffices to reduce $\Delta n'$ to nearly zero and the retardation, $\Delta n'd$, then approaches zero. Upon slowly reducing the voltage, the number of transmittance oscillations identifies M.

Considering the property of viscosity, suffice it to say hereat that viscosity influences the response time of the cell as the voltage applied thereto is changed.

Concerning the property of dielectric anisotropy, suffice it to say that the higher this parameter, the lower the voltage required to rotate the liquid crystal molecules. However, since there is little need for a birefringent filter to respond to very low voltages, just about all of the materials mentioned hereinbefore have an acceptable dielectric anisotropy.

Considering the property of nematic temperature range, the birefringence of a liquid crystal is a function of temperature and all applications will require thermostatic control, typically within plus or minus 0.5°C.

For use in a Lyot filter, plates 12 and 13 should have high transmittance, low strain, and maximum flatness. The sides of plates 12 and 13 are typically polished to 1/4 fringe.

Conducting layers 16 and 17 are typically a tin-doped $In_2O_3$ layer. The technique for the deposition of such a layer onto plates 12 and 13 is well known to those skilled in the art.

In a liquid crystal cell, it is necessary to align the liquid crystal molecules such that the long axes of the molecules are parallel to each other and approximately parallel to the surfaces of plates 12 and 13. This can be achieved by rubbing the inside surfaces of plates 12 and 13, as is known in the art. Alternatively, alignment layers 18 and 19 on the inside surfaces of plates 12 and 13 may be used. In this later case, the liquid crystal molecules are typically aligned with lyers of SiO deposited by evaporation at low or high angles relative to the surfaces of plates 12 and 13 (so called L and H coats). The alignment properties of SiO layers 18 and 19 will be described more fully hereinafter.

As mentioned previously, the thickness and parallelity of plates 12 and 13 is of utmost importance. Accordingly, conventional methods of separating plates 12 and 13 are unsuitable for use in a birefringent filter. According to the preferred embodiment of the present invention, glass fibers, such as plural fibers 14, have proven to be suitable for use as separators. Fibers can be produced having a diameter from 3 to 50 µm and cut into segments. These segments can be examined under a microscope to select segments having a uniform thickness and the desired diameter. After plates 12 and 13 are formed and positioned on opposite sides of these selected fibers 14, the entire structure can be clamped together and sealed with plastic in a manner similar to that used in the manufacture of liquid crystal displays.

For use in a Lyot filter, each cell 10 is sandwiched between a pair of polarizers 20 and 21. The optical axes of polarizers 20 and 21 are parallel and oriented at a 45° angle to the optical axis of cell 10. The significance of this will be described more fully hereinafter with regard to the discussion of a plurality of cells for use in a filter.

Still considering cell 10, it is essential that the retardation in each cell of a plurality of stacked cells be uniform across the area common to a beam of light passing therethrough. Furthermore, since the retardation will be a function of the voltage applied to layers 16 and 17, retardation must vary equally over the area of the beam when the field is applied. This uniformity can only be obtained when liquid crystal layer 11 is in a uniform nematic phase.

In the absence of a field applied between layers 16 and 17, the liquid crystal molecules assume an orientation dictated by alignment layers 18 and 19. That is, the angle between the director, or optic axis, and the plane of electrodes 16 and 17 in the absence of a field is called the surface director tilt and is a function of alignment layers 18 and 19. The two alignment layers most commonly encountered in liquid crystal displays are the so-called H and L coats formed by depositing SiO on plates 12 and 13 at incidence angles of about 60° and 83°, respectively. It has been ascertained that the surface director tilt with an H coat is 0° and with and L coat is 25°. Other alignment layers known to those skilled in the art produce intermediate surface director tilts.

Four general classes of liquid crystal structure can be identified depending upon the surface director tilts. These classes will be called HH (both layers 18 and 19 being H layers), HL (one of layers 18 and 19 being an H layer and the other being an L layer), uniform LL (both layers 18 and 19 being L layers with the directors tilted in the same direction), and splayed LL (both layers 18 and 19 being L layers eith the directors tilted in opposite directions).

When a field is applied to any of these cells, by applying a voltage between conducting layers 16 and 17, via leads 22 and 23, respectively, the field exerts a torque on the liquid crystal molecules and this torque is a function of the field strength, the dielectric anisotropy of the liquid crystal molecules. Since the wall forces are stronger than the field forces, those molecules adjacent to plates 12 and 13 are relatively uninfluenced by the field. The elastic forces of the liquid crystal structure then distribute tilt within the cell and those molecules at the center of the cell are usually tilted most.

In the class HL and uniform LL cells, all the liquid crystal molecules have a finite tilt at zero field. Consequently, any applied field exerts an immediate torque on the molecules and they rotate in the direction initiated by the surface director tilt. In the class HH cells, there is no tilt at zero field; hence, there is no preferred direction for the molecules to rotate when a field is applied. Consequently, different areas of the cell tilt in opposite directions, making this class of cells unsuitable for use in a filter.

The splayed LL cells exhibit an even more troublesome behavior. When a field is applied to these cells, the tilted molecules away from the walls experience the highest initial torque and rotate in directions to increase tilt; however, molecules of opposite tilt exist in these cells at zero field. In an effort to accommodate the elastic forces within these cells, the liquid crystal molecules assume a 180° twist which persists when the field is removed. For this reason, the splayed configuration is to be avoided in a birefringent filter.

Turning to the uniform LL structure, it is noted that splaying cannot occur, hence, it is not usually possible to obtain a twisted structure. The finite surface director tilt also eliminates reverse tilt behaviour. Obviously, therefore, this type of cell is to be preferred. Its main disadvantage is the reduced apparent birefringence because of the surface director tilt, but this disadvantage may be negligible if an alignment layer producing a tilt of 3—10° is used.

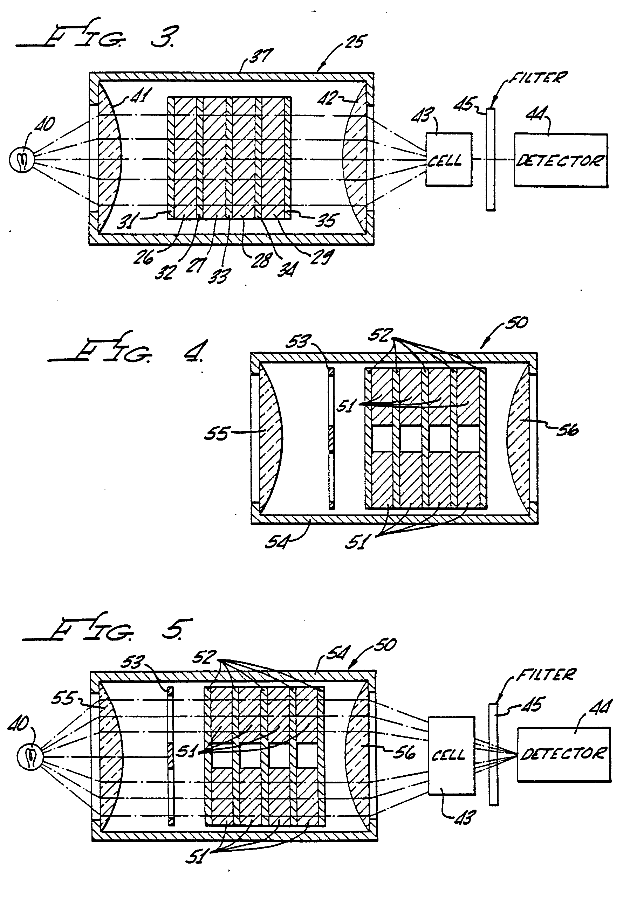

Ignoring for the moment the complicating factors of source irradiance, detector sensitivity, system absorption, and retarder dispersion, which will be discussed more fully hereinafter, Figure 2(a) is a plot of the intensity of light passing through a cell, such as cell 10, with polarizers on opposite sides thereof, as a function of wavelength, and $\Delta$nd held constant. It is seen that as the wavelength changes, intensity will vary in a cyclic manner. Figure 2(b) shows the intensity of light passing through a cell of twice the thickness of the first cell as a function of wavelength. Figure 2(c) shows the intensity of light passing through a cell whose retardation is four times that of the cell exhibiting the transmittance shown in Figure 2(a). If a light beam now passes sequentially through all three cells, separated by polarizers, the transmittance spectrum is shown in Figure 2(d). It is seen that the addition of multiple retarders has the effect of decreasing the half bandwidth of the primary maxima while reducing the intensity of the intermediate sidebands. The most efficient reduction in sideband intensity occurs for geometric progressions of retarder thickness. A blocking filter is commonly used in Lyot filters to eliminate one of the two remaining peaks.

Two of the important properties of a filter are half bandwidth (HBW) and stray-light ratio (SLR). The width of the two high-intensity bands at half maximum intensity is called the half bandwidth. The SLR is the ratio of detected radiant power outside of a given bandwidth to the total detected radiant power. The usual given bandwidth is defined as that spectral region five half bandwidths on either side of the design wavelength. Resolution improves inversely in proportion to HBW. Accuracy in the ultimate use of a filter increases inversely in proportion to SLR. Thus, we desire to achieve both a small HBW and a small SLR.

Increasing the number of elements in a filter reduces the HBW but does not necessarily reduce the SLR. The reason is that when the number of elements is increased, the denominator of the SLR may decrease faster than the numerator. Increasing the number of elements in a filter, where all elements have the same order, M, decreases HBW slowly while rapidly decreasing SLR. Adding elements to a filter in a geometric progression of M, as described by Lyot, rapidly decreases HBW but actually increases SLR. The challenge in designing a good filter is in selecting orders of elements between these extremes. According to the present invention, the best compromise is found in an arithmetic progression of low order elements and a near geometric progression of high order elements, as will be discussed more fully hereinafter.

In order for a filter to be useful for clinical applications, a filter at 700 nm would have to have an HBW of less than 20 nm and a SLR of well under 1%. As will be discussed more fully hereinafter, this can be achieved with a filter consisting of seven or more elements.

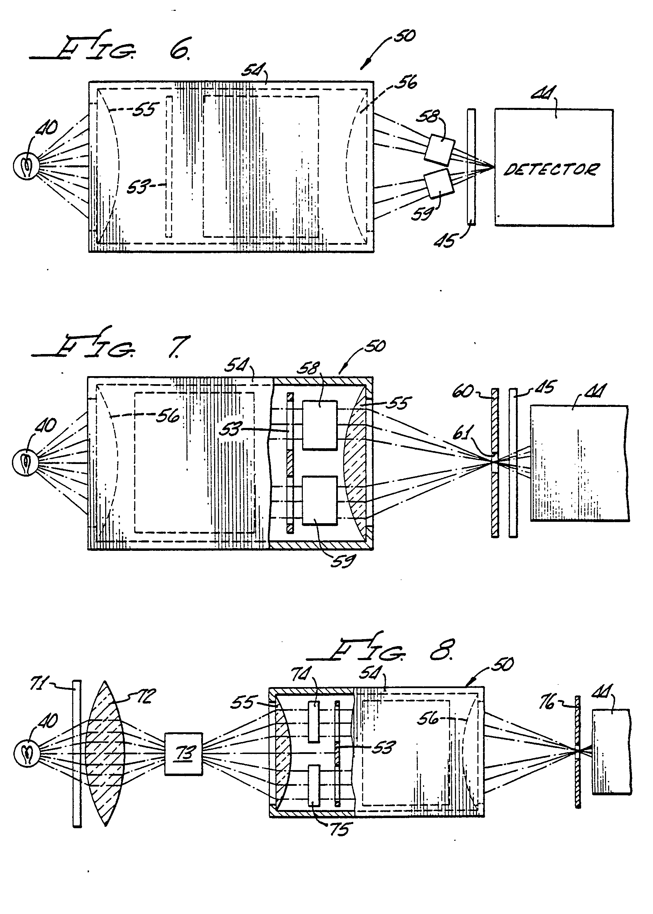

A generalized form of a filter, generally designated 25, constructed in accordance with the teachings of the present invention, is shown in Figure 3. With reference to Figure 3, filter 25 includes four cells 26—29, each identical to cell 10 of Figure 1. In actuality, more cells may and will be included. A polarizer 31 is positioned on the outside of cell 26, a polarizer 32 is positioned bewteen cells 26 and 27, a polarizer 33 is positioned between cells 27 and 28, a polarizer 34 is positioned between cells 28 and 29, and a polarizer 35 is positioned on the outside of cell 29. A cell and a polarizer make up an element. It is seen that there is one more polarizer than there are elements.

Cells 26—29 and polarizers 31—35 are mounted within a thermostated enclosure 37. In the simplified embodiment shown in Figure 3, a pair of contacts are required for each cell and these would extend out through enclosure 37. One contact of each cell may be interconnected to form a common ground. A temperature in the range of 37—45°C is contemplated with a tolerance of plus or minus 0.5°C. A filter, including thermostat, can be as small as 1×1×1/2 inches (2.54×2.54×1.27 cm).

In its most simple use, light from a source 40 may be collimated by a lens 41 and conducted through the arrangement of cells and polarizers in enclosure 37. A second lens 42 refocuses the filtered beam on a cell 43 holding a sample under test. A detector 44 may be positioned close to cell 43 to detect rays scattered by the sample. A blocking filter 45 may be positioned between cell 43 and detector 44 to restrict the tuning range of filter 25. Blocking filter 45 also serves to reduce the sensitivity of detector 44 to ambient light when cell 43 is not totally enclosed.

The waveforms of Figures 2(a)—2(d) show the transmittance spectrum of a multiple element filter, such as filter 25, ignoring the complicating factors of source irradiance, detector sensitivity, system absorption, and retarder dispersion. However, in reality, these factors must be considered. In fact, the dispersion of real birefringent materials considerably modifies the simple theory.

Specifically, all known birefringent materials exhibit a significant wavelength dependence of birefringence across the visible region. This dispersion of birefringence forces the interference minimum of one order to fall at some other wavelength than that for the interference maximum at geometrically lower or higher orders. This complicates the design of an optimum filter and requires the use of orders in other than geometric progression.

Determination of the optimum order combination is determined by experimentation. Equation (2) permits the generation of a retardation spectrum for a retarder of a given order. The following equation closely defines the dependence of birefringence on wavelength for a typical liquid crystal mixture and can be used in place of $\Delta n$:

$$\Delta n = (1.215)10^{-1} + (4.235)10^{2}/\lambda^{2} \qquad (4)$$
$$- (8.198)10^{-3}/\lambda^{4} + (7.069)10^{-4}/\lambda^{6}.$$

Generating such a retardation spectrum, typically using a computer, for a filter with a design wavelength of 700 nm, will show that all curves reach maximum transmittance at 700 nm and also at 432 nm, rather than at 350 nm. At 432 nm, the ratio of the retardation to the wavelength is twice that at 700 nm for all orders. The interval between these two wavelengths will be called one octave of retardation. If stray light is to be held within tolerable limits, some mechanism must limit system response to less than one octave of retardation. This may be source irradiance, detector sensitivity, or the use of a blocking filter.

A computer simulation is the preferred method of selecting the number of elements and the order of such elements to achieve a given result. This computer simulation must consider the spectral emittance of the source and the spectral sensitivity of the detector as well as fundamental equations (3) and (4). Actually, the best criterion for selection of order combinations is the integration of signal transmitted in the interval of stray light divided by the total integrated signal. A convenient way of appraising this data is to plot the accumulated sum as a function of wavelength away from the design wavelength. In this way, one can determine the span of tunability for some specified SLR. Such a computer simulation has shown that an eight element filter with the orders 1, 1, 2, 3, 4, 5, 8 and 13 will give a resolution of 20 nm and a stray-light ratio of 1% at 700 nm while tuning over the range of 480—700 nm with a single blocking filter. This same filter, with different blocking filters, will exhibit the same characteristics with a resolution of 12 nm and 8 nm in the ranges of 385—480 nm and 340—385 nm, respectively. It can be seen that such a filter has an arithmetic progression of low order elements and a near geometric progression of high order elements.

In forming such a filter, each cell would be identical except that progressive cells will have different thicknesses in accordance with the orders. Thus, a 13th order cell will be thirteen times as thick as the first order cell. However, the thicker a cell, the slower its response time and, as a result, the higher orders of cells often become excessively thick and slow. This undesirable situation can be overcome in a variety of different ways; such as, using, instead of one thick cell, two or more stacked cells having lesser thicknesses. In such a case, more than one cell would be positioned between consecutive polarizers. Alternatively a liquid crystal cell of reduced thickness can be combined with a fixed retarder made of quartz or a polymer film.

It will be mentioned here, briefly, that it is possible to flatten the detected radiant power spectrum and simultaneously limit a filter's practical range by using blocking filters. These filters can be of two types, glass absorption and interference. The use of such blocking filters in filter instruments is well known to those skilled in the art.

With a filter, such as described hereinbefore and as to be described more fully hereinafter, it is possible to make a variety of different types of double-beam and dual-wavelength photometers with no moving parts. It is evident that two types of birefringent filters are possible: the continuously tunable type and the step tunable type. The retardation of all elements must be smoothly adjustable in the continuously tunable filter. In the step-tuned filter, this is not required.

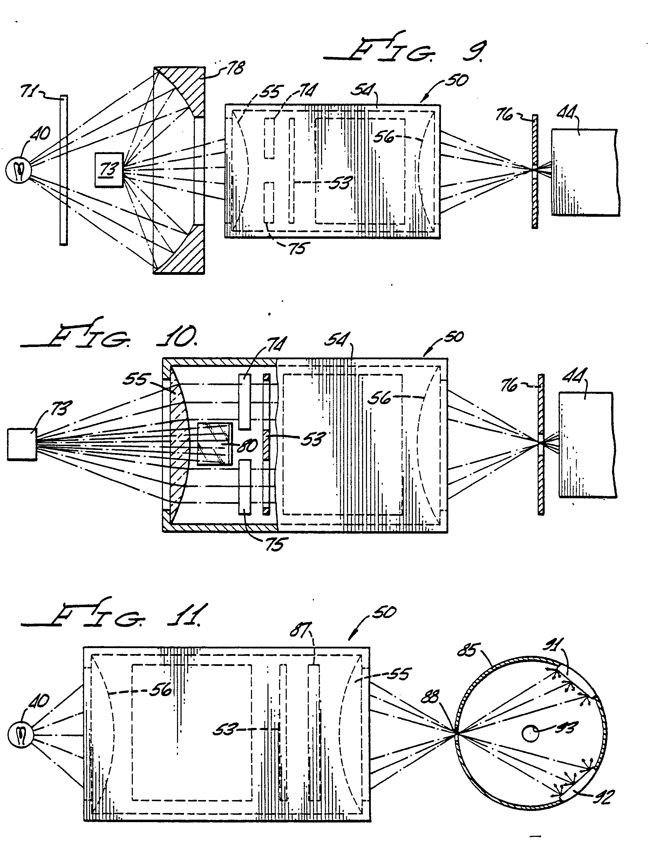

Figure 4 shows a birefringent filter, generally designated 50, for use in a dual-beam photometer. Filter 50 includes four stacked sets of cells 51 sandwiched between polarizers 52. The general configuration of filter 50 is the same as filter 25, except that each cell of filter 25 is replaced by a pair of parallel cells 51. This provides dual-beam operation. An aperture plate 53 masks all but the two desired areas of the liquid crystal cells 51 defined by the cell conducting layers. These components are mounted within a thermostated enclosure 54 having lenses 55 and 56 at opposite ends thereof, as described previously with regard to filter 25. Ideally, the two lenses are achromatic over the range 340—700 nm. In practice, the finite size of real sources and the dispersion of real lenses will distort the beam collimation, but perfect collimation is not required. No electrical contacts are shown in Figure 4, as is the case with all other figures. Three contacts are required for each pair of parallel cells 51, a common ground and one lead for each half.

Figures 5 and 6 show how filter 50 may be used for absorption, fluorescence and reflectance spectroscopy. No moving parts are required except for the wavelength range selector which may be ganged to the blocking filters shown. More specifically, Figure 5 shows filter 50 used for dual-wavelength spectroscopy, the arrangement being similar to that shown in Figure 3 for a single-wavelength instrument. That is, reference numeral 40 designates a continuum source, which may be a low-voltage, filament, tungsten lamp. The beam emerging from filter 50 is focused through cell 43 holding a sample under test onto detector 44 which is positioned close to sample cell 43 in order to detect light scattered by the sample. Blocking filter 45 is positioned between sample cell 43 and detector 44 to restrict the tuning range of filter 50.

For dual-wavelength measurements, three signals are desired. The first signal is proportional to the intensity $I_1$ when filter 50 (either or both halves) is set to wavelength $\lambda_1$ with a beam passing through the sample. The next signal is proportional to the intensity $I_2$ when the signal is set to wavelength $\lambda_2$ and the third signal is proportional to the intensity $I_3$ when the filter is opaque. The manner in which this can be achieved will be described more fully hereinafter. The desired quantity is usually:

$$\frac{I_1 - I_3}{I_2 - I_3} \qquad (5)$$

These three signals are sequentially obtained as the voltage is changed on the cells in filter 50.

In Figure 6, filter 50 is used for double-beam absorption spectroscopy. In this case, sample and reference cells 58 and 59 are positioned in the paths of the two beams, as shown. Otherwise, the configuration remains unchanged. If it is desired to maintain the sample at the same temperature as filter 50, cells 58 and 59 could be located within enclosure 54, immediately in front of lens 55, as shown in Figure 7. Blocking filter 45, detector 44, and source 40 serve the same functions as described in Figure 5.

For double-beam spectroscopy, both halves of filter 50 transmit the same wavelength, but at different times. This is accomplished by alternately setting the two halves of the filter to be opaque. Three temporally separated signals are obtained from detector 44, the third occurring when both halves are opaque. Identifying these

signals as $I_{58}$, $I_{59}$, and $I_3$, the transmittance of a solution placed in cell 58 with a solvent in cell 59 is given by:

$$T = \frac{I_{58} - I_3}{I_{59} - I_3} \qquad (6)$$

The instrument configuration shown in Figure 6 is well suited for the measurement of diffused transmittance of turbid samples because detector 44 may be located close to cells 58 and 59.

In some cases, it is desirable to reject the rays scattered by a sample. The configuration shown in Figure 7 accomplishes this objective. The instrument configuration shown in Figure 7 is similar to that shown in Figure 6, with the primary distinction being that detector 44 and blocking filter 45 are spaced from lens 55 so that an aperture plate 60, having a small pin hole 61, may be positioned at the focal point of lens 55. Also, cells 58 and 59 are shown located within enclosure 54, between aperture plate 53 and lens 55.

Fluorescence measurements with a 0° illumination geometry can be made with the configuration shown in Figure 8. The configuration of Figure 8 includes source 40, which may be the same type used in Figures 5—7, or may be an emission source such as a mercury arc. On one side of source 40 is a blocking filter 71 of the short-path variety designed to pass the exciting radiation and reject the fluorescent radiation. Adjacent filter 71 is a lens 72 which focuses this exciting radiation on a sample in a sample cell 73. The radiation from cell 73 impinges on lens 55 of filter 50, which has a pair of blocking filters 74 and 75 positioned within housing 54, between lens 55 and aperture plate 53.

Blocking filter 74 is designed to pass the fluorescing radiation and reject the exciting radiation. The upper half of filter 50 can then be tuned to the desired portion of the fluorescence spectrum. Blocking filter 75 is designed to pass the exciting radiation while rejecting the fluorescent radiation. The lower half of filter 50 is tuned to the wavelengths of exciting radiation. The focused beam from filter 50 passes through an aperture plate 76 onto detector 44. The signals from detector 44 are again sorted by alternately tuning the halves of filter 50 to be opaque. The desired output is the ratio of the zero corrected fluorescence to zero corrected excitation signals.

The configuration shown in Figure 8 can be used in a single-beam mode by tuning both halves of filter 50 to the same fluorescence wavelength (alternated with opaque zero measurements). Blocking filter 75 would then be identical to filter 74. This mode does not compensate for source fluctuations, but permits use of exciting light of wavelength shorter than 340 nm (filter 50 being opaque to these wavelengths). Furthermore, by switching source 40 and detector 44 positions in Figure 8, the configuration can be used for excitation spectroscopy provided the excited light need not have a wavelength shorter than 340 nm.

The 0° illumination geometry of Figure 8 is suitable only for samples which exhibit low absorption of both exciting and fluorescing radiation. When absorption is high, a front illumination is better and is superior to the 90° geometry conventionally used. Figure 9 shows how this illumination geometry can be adapted for a birefringent filter.

Referring now to Figure 9, the configuration is similar to that shown in Figure 8, except that lens 72 is replaced by a mirror 78, which is an annular segment of an ellipsoid, which focuses the rays from source 40 onto the sample in cell 73. Blocking filter 71 again passes the exciting radiation while rejecting the fluorescing radiation. In this case, if the front surface of sample cell 73 is lightly etched, a sufficient amount of the exciting radiation will scatter back through blocking filter 75 to give a signal proportional to the exciting intensity. The fluorescence radiation passes through blocking filter 74 and the upper half of filter 50.

Still another configuration ideal for fluorescence measurements with a laser source is shown in Figure 10. The configuration of Figure 10 is similar to Figures 8 and 9, except that source 40, blocking filter 71, lens 72 and mirror 78 are omitted. Instead, a small plain mirror 80, within enclosure 54, between block filters 74 and 75, reflects light from a laser located normal to the plane of the illustration. The reflected rays are focused by lens 55 onto the fluorescing sample in cell 73. The scattered radiation is sensed by filter 50 in the same manner as described previously for the configuration of Figure 9.

Referring now to Figure 11, there is shown a configuration for making reflectance measurements. The configuration of Figure 11 includes an integrating sphere 85 containing four ports. The configuration also includes source 40 and filter 50 having a single blocking filter 87 positioned therein, between aperture plate 53 and lens 55. The two halves of filter 50 alternately pass radiation of the same wavelength through one small port 88 in sphere 85, located at the focal point of lens 55. The rays alternately fall on a reference reflector plate 91 and a sample reflector 92 positioned at two of the remaining ports. The integrated reflected radiation is detected by a detector (not shown) located at a port 93 out of the plane of the illustration. The two beams are again isolated by alternately tuning the two halves of filter 50 to being opaque.

Alternately, the positions of source 40 and the detector in Figure 11 can be interchanged. This permits a discrimination between reflection and fluorescence at the sample.

It was mentioned previously that in an eight-element filter, it is desirable to use two first-order elements. The reason for this is two-fold. The first-order element is the most effective in absorbing light in those vicinities furthest from the wavelength of maximum transmittance, where there is the most stray light. Therefore, by using two first-order elements, there tends to be a flattening of the area of minimum transmittance, that area between the two peaks in Figure 2(a). Furthermore, one of the two first-order elements can be used as a modulator to render the filter alternately transmissive and opaque.

That is, recall that when $\Delta nd = M\lambda$, where M is an integer, the intensity equals unity and that when $\Delta nd = N\lambda/2$, where N is an odd integer, the intensity falls to zero. Thus, one of the first order elements in any of the filter arrangements of Figures 3—11 can alternately be driven between the conditions where the intensity equals unity and where the intensity is zero to render the filter transparent and opaque.

The major problems associated with the development of a wide tuning range birefringent filter, such as filter 50, have been discussed. It is desirable to provide a filter system tunable over the range 340—700 nm so as to cover both the ultraviolet and visible ranges. The ratio $\Delta n\lambda$ doubles between 700 and 432 nm. Between 432 and 336 nm, retardation doubles again. In theory, therefore, the 340—700 nm region could be covered with blocking filters isolating these two octaves. In practice, however, the finite HBW of a birefringent filter and the roll-off characteristics of absorption-type blocking filters force the use of three blocking filters. The use of three blocking filters alternately interposed in the optical beam should present no problem in practice. With a system designed to transmit at 700 nm with zero voltage applied to all of the filter cells, the filter system can be tuned from 700 nm to 340 nm by continuously increasing the voltage on the liquid crystal cells, with periodic changes in the blocking filters.

Considering the voltage necessary to drive a liquid crystal cell, the average tilt of the liquid crystal molecules in the cell increases as the field on the cell is increased. The average tilt is specified because there is a distribution of tilt within the cell. That is, those molecules closest to the cell walls hardly move and the central molecules experience the greatest tilt. The retardation produced in a property oriented cell is a function of this average tilt.

The voltage function is defined as a plot of retardation versus voltage. The voltage function is determined by measurung transmittance at a fixed wavelength as a function of the applied field. The retardation is then computed from the transmittance using equation (3).

Since retardation ás a function of voltage is a nonlinear function, one would expect that the voltage function for cells having different thicknesses would also be different. However, experimentation has shown that the voltage function expressed as a fraction of the zero field retardation is independent of the thickness of the cell. This is a highly desirable characteristic of liquid crystal cells since it means that the same voltage can be applied to all of the cells in a filter system, such as filter 50, provided the cells are of the proper thicknesses. This can ultimately permit the connection of all cells in parallel with a single set of leads for a filter system to adjust its transmittance over the range of 340—700 nm.

Careful attention has to be given to the waveform and frequency of the field applied to the cells of a filter when tuning wavelength. DC fields are undesirable because the cells can polarize, changing the retardation versus voltage function. Therefore, the voltage necessary to tune lter should be applied to the cells as a symmetrical AC signal. On the other hand, dielectric anisotropy decreases with increasing frequency and, for some materials, may reverse sign around 30 kHz. Consequently, there is an optimum range of frequencies between DC and 30 kHz, and experiments have shown this range to be approximately 300 Hz to 3 kHz.

At least one of the cells of a filter may operate as a modulator to render the filter alternately transparent and opaque at the tuned wavelength. The modulator cell will usually be the thinnest cell in the filter since it will have the fastest response time to the modulating signal. Appreciable light intensity modulation can occur at frequencies as high as 1 kHz. Desirable modulation frequencies usually fall in the range of 10 to 100 Hz.

It is essential that the frequency used for tuning be significantly higher than the frequency used for modulation to avoid cell polarization effects. Hence the tuning frequency should be at least 1 kHz. These factors lead to a filter in which a carrier signal having a frequency of 1—3 kHz is applied to all cells, while the signal applied to the modulator cell only is modulated at a frequency of 10 to 100 Hz between voltage levels which will render the filter alternately transmissive and opaque.

One of the disadvantages found for use of a birefringent filter, as described herein, is low transmittance. This low transmittance is largely caused by absorption within the polarizers and theoretically could be improved using superior polarizers. Glass blocking filters also contribute significant losses and better blocking filters of the interference type will increase transmittance. However, experimentation has shown that sufficient radiant power can be transmitted through a filter of the type described herein for the filter system to be practical.

It is possible to design a birefringent filter that passes a series of discrete wavelengths by using a fixed retarder, such as a quartz plate, only in the highest order element. Unlike the filter systems described heretobefore, this filter does not incorporate a variable retarding component within the highest-order element. There are many spectral photometric applications where a series of discrete wavelengths suffice. For example, there are many clinical analyses that could be accomplished with a filter system selecting only the wavelengths 340, 380, 405, 465 and 700 nm. Such a filter could be constructed using the same eight-order combinations described hereinbefore, except for the highest-order element.

As can be seen from an examination of Figures 2(a)—2(c), the transmittance of each element is oscillatory as a function of wavelength with many maxima. These maxima are closest together for the highest order element. Therefore, the seven variable retardation cells can be used to tune the filter to one of the wavelengths at which the fixed retarder element has maximum transmission. The advantages of this system are: (1) a decreased sensitivity to temperature because of a low temperature coefficient of retardation in quartz and other solid state retarders, and (2) a narrow bandwidth with good response time. The latter advantage accrues because it is no longer necessary to vary the retardation of the highest order and slowest responding element.

The requirements on beam collimation with a birefringent filter warrant further discussion. If different portions of the beam experience varying retardation, the filter does not pass a narrow band of wavelengths and its performance degrades. Such a varying retardation can occur if the cell thickness is not uniform across the beam. It can also occur if the beam converges or diverges on passing through the cell. That is, if all the rays are not parallel (collimated), different rays will suffer different retardations, both because of propagation along paths of different distances and difference indices. Retardation is most sensitive to collimation of rays in the plane common to the tilting optic axes of the liquid crystal molecules. Retardation is not very sensitive to collimation of rays in the perpendicular plane.

In the conventional Lyot filter, collimation sensitivity is minimized by rotating the optic axis by 90° in alternate retarding elements. In the present case, collimation sensitivity may be minimized by maintaining a common plane of the tilting optic axes in all cells. In this manner, collimation in this single plane only need be assured.

Collimation in one plane only is widely utilized in optical instruments by employing a slit as the defining aperture. The combination of a slit and a lens or mirror functioning as a collimator allows more light flux through a system than that obtained with a fully collimated beam obtained with a pin-hole aperture and a collimator.

It can, therefore, be seen that a moderately narrow band, tunable, birefringent filter is dislosed using zero-twist, nematic-phase, liquid crystal cells 10 as variable retarders in Lyot-type arrangements. Filters 25 and 50 can achieve analytically useful levels of resolution and stray-light ratios for costs that are competitive with prism and grating monochromators. Moreover, filters 25 and 50 can be tuned and/or rendered opaque by applying appropriate voltages to the cells 10 thereof. Thus, a double-beam instrument, such as those shown in Figures 5—11, can be constructed with no moving parts other than those required to exchange blocking filters. Power requirements for such filters are negligible, and a useful filter can be designed to occupy a volume of less than one cubic inch. These properties render such a filter ideally suited to microprocessor control.

While the invention has been described with respect to the preferred physical embodiments constructed in accordance therewith, it will be apparent to those skilled in the art that various modifications and improvements may be made without departing from the scope of the invention. Accordingly, it is to be understood that the invention is not to be limited by the specific illustrative embodiments, but only by the scope of the appended claims.

## Claims

1. A tunable light filter adapted to be positioned in the path of a beam of light, comprising:
   a plurality of birefringent liquid crystal cells arranged in a stack, each of said cells including an electro-optic material;
   a polarizer between at least some of the cells and before and after the first and last cells, respectively, in said stack, whereby said beam of light passes sequentially through all of said cells and said polarizers; and
   means for applying a voltage to at least some of said cells to vary the birefringence thereof, wherein at least some of said cells produce different orders of retardation than others of said cells, and wherein at some voltage applied to each of said cells the retardation of all of said cells are integral multiples of a given wavelength, the orders of retardation of said cells varying from a lowermost order to an uppermost order; characterised in that the electro-optic material is a zero-twist nematic-phase liquid crystal material with a positive dielectric anisotropy and in that the orders of those of said cells having a relatively low order vary in an approximately arithmetic progression and the orders of those of said cells having a relatively high order vary in an approximately geometric progression.

2. A tunable light filter according to Claim 1, wherein the retardation of all of said cells are integral multiples of said given wavelength in the absence of a voltage applied to each of said cells.

3. A tunable light filter according to Claim 1 or 2, wherein varying the voltage applied to said cells shifts the wavelength at which the retardation of all of said cells are integral multiples.

4. A tunable light filter according to Claim 3, wherein the same voltage is applied to all of said cells.

5. A tunable light filter as claimed in any preceding claim, wherein:
   said polarizers are spaced at intervals along a propagation axis, each polarizer being characterized by a plane of polarization;
   said plurality of birefringent liquid crystal cells are spaced along the propagation axis within the intervals between the polarizers, any two cells being separated by at least one polarizer, each cell having an optic axis oriented so that the plane defined by the optic axis and the propagation axis forms a 45° angle with the plane of polarization of each of the two polarizers immediately adjacent to and on opposite sides of that cell, and wherein the optic axis of each cell changes in response to the voltage applied thereto.

6. A filter according to Claim 5, wherein one birefringent cell produces a greater relative phase shift than the other birefringent cells, and said one birefrigent cell is a fixed retarder whose retardation is independent of the tuning means.

7. A tunable optical filter according to Claim 5 or 6, further comprising a blocking filter for eliminating any peaks in the filter transmission spectrum at wavelengths other than the selected wavelength.

8. A tunable optical filter according to Claim 7, further comprising means for substituting different filters to operate as the blocking filter to select which one of a plurality of different wavelengths shall serve as the selected wavelength, the plurality of wavelengths consisting of all wavelengths at which the filter transmission spectrum would have a peak in the absence of the blocking filter.

9. A tunable light filter according to any preceding claim including eight birefringent liquid crystal cells, wherein the orders of said cells are 1, 1, 2, 3, 4, 5, 8 and 13, respectively.

10. A tunable light filter according to any preceding claim, wherein all of said cells are identical except for the thicknesses thereof, which thicknesses vary in proportion to the orders thereof.

11. A tunable light filter according to any preceding claim wherein the voltage applied to one of said cells is alternated between values which render said filter alternately transmissive and opaque.

12. A filter according to Claim 11, wherein the voltage applied to each liquid crystal cell is a symmetrical AC voltage having a first frequency;

said alternation of the voltage applied to said one cell between values rendering the filter transmissive and opaque is performed periodically at a secondary frequency; and

the second frequency is much less than the first frequency.

13. A tunable light filter according to Claim 12, wherein the first frequency is in the range of 300 Hz to 300 kHz, and the second frequency is in the range of 10 Hz to 100 Hz.

14. A tunable light filter according to Claim 6, wherein the fixed birefringent retarder is positioned between consecutive polarizers in the path of said beam of light.

15. A tunable light filter according to Claim 14, wherein said fixed retarder is made of quartz.

16. A tunable light filter according to Claim 14, wherein said fixed retarder is a polymer film.

17. A filtering device comprising a tunable light filter according to any preceding claim, further comprising:

means for directing a collimated beam of light through said stack of cells and said polarizers.

18. A filtering device according to Claim 17, further comprising means for focusing the collimated beam emergent from said stack of cells and polarizers.

19. A filtering device according to Claim 17 or 18 including first and second stacks of birefringent liquid crystal cells as claimed in any of Claims 1 to 16, said first and second stacks being disposed in parallel, spaced relationship, and said directing means directing different portions of said light beam through said first and second stacks.

20. A filtering device according to Claim 19, including modulator means for alternately allowing light transmission along the two paths including the first and second stacks, respectively.

**Patentansprüche**

1. Zur Anordnung im Strahlengang eines Lichtbündels geeignetes abstimmbares Lichtfilter, umfassend:

eine Mehrzahl von in einem Stapel angeordneten doppelbrechenden Flüssigkristallzellen, wobei jeweils jede der Zellen ein elektrooptisches Material enthält;

einen Polarisator zwischen wenigstens einigen der Zellen sowie vor bzw. nach der ersten bzw. der letzten Zelle in dem Stapel, wobei das genannte Lichtbündel aufeinanderfolgend sämtliche genannten Zellen und genannten Polarisatoren durchsetzt; sowie

Mittel zum Anlegen einer Spannung an wenigstens einige der genannten Zellen, um deren Doppelbrechung zu ändern, wobei wenigstens einige der genannten Zellen andere Ordnungen von Retardation (Verzögerung, Gangunterschied) als andere von den genannte Zellen erzeugen, und wobei bei Anlegen einer bestimmten Spannung an jede der genannten Zellen die Retardation (der Gangunterschied) sämtlicher Zellen ganzzahlige Vielfache einer gegebenen Wellenlänge sind und die Ordnungen der Retardation (Verzögerung, Gangunterschied) der genannten Zellen von einer niedrigsten Ordnung zu einer höchsten Ordnung variieren;

dadurch gekennzeichnet, daß das elektrooptische Material ein Flüssigkristallmaterial in nematischer Phase mit Twist Null und mit einer positiven dielektrischen Anisotropie ist, und daß die Ordnungen derjenigen von den genannten Zellen, welche ein relativ niedrige Ordnung haben, annähernd gemäß einer arithmetischen Folge variieren, und die Ordnungen derjenigen von den genannten Zellen, die eine relativ hohe Ordnung aufweisen, in einer annähernd geometrischen Folge variieren.

2. Abstimmbares Lichtfilter nach Anspruch 1, bei welchem die Retardation (Verzögerung, Gangunterschied) sämtlicher genannten Zellen ganzzahlige Vielfache der genannten gegebenen Wellenlänge in Abwesenheit einer jeweils an die einzelnen Zellen angelegten Spannung sind.

3. Abstimmbares Lichtfilter nach Anspruch 1 oder 2, bei welchem eine Änderung der an die genannten Zellen angelegten Spannung eine Verschiebung der Wellenlänge, bei welcher die Retardation (Verzögerung, Gangunterschied) sämtlicher genannten Zellen ganzzahlige Vielfache sind, bewirkt.

4. Abstimmbares Lichtfilter nach Anspruch 3, bei welchem an sämtliche genannten Zellen die gleiche Spannung angelegt wird.

5. Abstimmbares Lichtfilter nach einem der vorhergehenden Ansprüche, bei welchem:

die genannten Polarisatoren in Abständen voneinander längs einer Ausbreitungs- bzw. Fortpflanzungsachse angeordnet sind und jeweils jeder Polarisator durch eine Polarisationsebene charakterisiert ist;

die genannte Mehrzahl von doppelbrechenden Flüssigkristallzellen in Abständen entlang der Ausbreitungs- bzw. Fortpflanzungsachse innerhalb den Intervallen zwischen den Polarisatoren angeordnet sind, wobei jeweils je zwei Zellen durch wenigstens einen Polarisator voneinander getrennt sind, jede Zelle eine so orientierte optischen Achse hat, daß die von der optischen Achse und der Ausbreitungs- bzw. Fortpflanzungsachse definierte Ebene einen Winkel von 45 Grad mit der Polarisationsebene jedes der beiden dieser Zelle auf gegenüberliegenden Seiten unmittelbar benachbarten Polarisatoren bildet, und wobei die optische Achse jeder Zelle sich jeweils in Abhängigkeit von der an diese angelegten Spannung ändert.

6. Filter nach Anspruch 5, bei welchem eine doppelbrechende Zelle eine größere relative Phasenverschiebung als die anderen doppelbrechenden Zellen erzeugt und die genannte eine doppelbrechende Zelle einen konstanten Retarder bildet, dessen Retardation (Verzögerung, Gangunterschied) unabhängig von den Abstimmmitteln ist.

7. Abstimmbares optisches Filter nach Anspruch 5 oder 6, desweiteren umfassend ein Sperrfilter zur Eliminierung jeglicher Spitzen in dem Filter-Transmissionsspektrum bei anderen Wellenlängen als der ausgewählten Wellenlänge.

8. Abstimmbares optisches Filter nach Anspruch 7, desweiteren umfassend Mittel zum wahlweisen Einsatz verschiedener Filter zur Wirkung als das Sperrfilter, zur Auswahl welche von einer Mehrzahl verschiedener Wellenlängen als die ausgewählte Wellenlänge dienen soll, wobei die Mehrzahl von Wellenlängen aus allen Wellenlängen besteht, bei welchen das Filter-Transmissionsspektrum in Abwesenheit des Sperrfilters eine Spitze hätte.

9. Abstimmbares Lichtfilter nach einem der vorhergehenden Ansprüche, umfassend acht doppelbrechende Flüssigkristallzellen, wobei die Ordnungen der genannten Zellen 1, 1, 2, 3, 4, 5, 8 bzw. 13 sind.

10. Abstimmbares Lichtfilter nach einem der vorhergehenden Ansprüche, bei welchem sämtliche Zellen bis auf ihre Dicken gleichartig sind, und die Dicken nach Maßgabe ihrer Ordnungen verschieden sind.

11. Abstimmbares Lichtfilter nach einem der vorhergehenden Ansprüche, bei welchem die an eine der genannten Zellen angelegte Spannung zwischen Werten abwechseln, welche das genannte Filter abwechselnd durchlässig und undurchsichtig machen.

12. Filter nach Anspruch 11, bei welchem die an jede Flüssigkristallzelle angelegte Spannung eine symmetrische Wechselspannung mit einer ersten Frequenz ist; der Wechsel der an die genannte eine Zelle angelegten Spannung zwischen Werten, welche das Filter durchlässig bzw. undurchlässig machen, periodisch bei einer zweiten Frequenz erfolgt; und die zweite Frequenz wesentlich kleiner als die erste Frequenz ist.

13. Abstimmbares Lichtfilter nach Anspruch 12, bei welchem die erste Frequenz im Bereich von 300 Hz bis 300 kHz und die zweite Frequenz im Bereich von 10 Hz bis 100 Hz liegt.

14. Abstimmbares Lichtfilter nach Anspruch 6, bei welchem der konstante doppelbrechende Retarder zwischen aufeinanderfolgenden Polarisatoren im Strahlengang des genannten Lichtbündels angeordnet ist.

15. Abstimmbares Lichtfilter nach Anspruch 14, bei welchem der genannte konstante Retarder aus Quarz hergestellt ist.

16. Abstimmbares Lichtfilter nach Anspruch 14, bei welchem der genannte konstante Retarder ein Polymerfilm ist.

17. Filtervorrichtung, welche ein abstimmbares Lichtfilter nach einem der vorhergehenden Ansprüche umfaßt, desweiteren umfassend:

Mittel, um ein kollimiertes Lichtbündel durch den genannten Stapel aus Zellen und den genannten Polarisatoren hindurchzulenken.

18. Filtervorrichtung nach Anspruch 17, desweiteren umfassend Mittel zur Fokussierung des aus dem genannten Stapel von Zellen und Polarisatoren austretenden kollimierten Lichtbündel.

19. Filtervorrichtung nach Anspruch 17, oder Anspruch 18, welche einen ersten und einen zweiten Stapel von doppelbrechenden Flüssigkristallzellen gemäß einem der Ansprüche 1—16 enthält, wobei der erste und der zweite Stapel parallel zueinander in Abstand voneinander angeordnet sind, und die genannten Mittel zur Hindurchlenkung des Lichtbündels voneinander verschiedene Bereiche des genannten Lichtbündels durch den ersten und den zweiten Stapel hindurchlenken.

20. Filtervorrichtung nach Anspruch 19, welche Modulatormittel aufweist, um abwechselnd den Lichtdurchtritt entlang den beiden den ersten bzw. den zweiten Stapel enthaltenden Strahlengängen zu ermöglichen.

**Revendications**

1. Filtre de lumière accordable adapté à être placé dans le trajet d'un faisceau de lumière, comprenant:

un certain nombre de cellules biréfringentes à cristaux liquides agencées en une pile, chacune desdites cellules comprenant un matériau électro-optique;

un polariseur entre au moins certaines des cellules et avant et après les première et dernière cellules, respectivement, dans ladite pile, pour qu'ainsi ledit faisceau de lumière passe séquentiellement à travers toutes lesdites cellules et lesdits polariseurs; et

un moyen pour appliquer une tension à au moins certaines desdites cellules pour changer leur biréfringence, où au moins certaines desdites cellules produisent des ordres différents de retardation par rapport à d'autres desdites cellules, et où à une certaine tension appliquée à chacune desdites cellules, la retardation de toutes lesdites cellules sont des multiples entiers d'une longueur d'onde donnée, les ordres de retardation desdites cellules variant d'un ordre le plus bas à un ordre le plus haut; caractérisé en ce que le matériau électro-optique est un matériau de cristaux liquides à torsion nulle et à phase nématique avec une anisotropie diélectrique positive et en ce que les ordres de celles desdites cellules ayant un ordre relativement bas varient en une progression à peu près arithmétique et les ordres de celles desdites cellules ayant un ordre relativement haut varient en une progression à peu près géométrique.

2. Filtre à lumière accordable selon la revendication 1, où la retardation de toutes lesdites cellules sont des multiples entiers de ladite longueur d'onde donnée en l'absence d'une tension appliquée à chacune desdites cellules.

3. Filtre à lumière accordable selon la revendication 1 ou 2, où la variation de la tension appliquée auxdites cellules déplace la longueur d'onde à laquelle la retardation de toutes les cellules sont des multiples entiers.

4. Filtre à lumière accordable selon la revendication 3, où la même tension est appliquée à toutes lesdites cellules.

5. Filtre à lumière accordable selon l'une des revendications précédentes, où:

lesdits polariseurs sont espacés à des intervalles le long d'un axe de propagation, chaque polariseur étant caractérisé par un plan de polarisation;

lesdites cellules biréfringentes à cristaux liquides sont espacées le long de l'axe de propagation dans les intervalles entre les polariseurs, deux cellules étant séparées par au moins un polariseur, chaque cellule ayant un axe optique orienté de manière que le plan défini par l'axe optique et l'axe de propagation forme un angle de 45° avec le plan de polarisation de chacun des deux polariseurs immédiatement adjacents à et sur des côtés opposés de cette cellule et où l'axe optique de chaque cellule change en réponse à la tension appliquée.

6. Filtre selon la revendication 5, où une cellule biréfringente produit un plus grand déphasage relatif que les autres cellules biréfringentes et ladite cellule biréfringente est un retardateur fixe dont la retardation est indépendante du moyen d'accord.

7. Filtre optique accordable selon la revendication 5 ou 6, comprenant de plus un filtre de blocage pour éliminer toutes les crêtes dans le spectre de transmission du filtre des longueurs d'onde autres que la longueur d'onde choisie.

8. Filtre optique accordable selon la revendication 7, comprenant de plus un moyen pour la substitution de différents filtres devant fonctionner comme filtre de blocage pour choisir laquelle d'un certain nombre de longueurs d'onde différentes devant servir de longueur d'onde choisie, les longueurs d'onde consistant en toutes les longueurs d'onde auxquelles le spectre de transmission du filtre aura une crête en l'absence du filtre de blocage.

9. Filtre à lumière accordable selon toute revendication précédente, comprenant huit cellules biréfringentes à cristaux liquides, où les ordres desdites cellules sont 1, 1, 2, 3, 4, 5, 8, et 13 respectivement.

10. Filtre à lumière accordable selon toute revendication précédente, où la totalité desdites cellules sont identiques à l'exception de leurs épaisseurs, lesquelles varient proportionnellement à leurs ordres.

11. Filtre à lumière accordable selon toute revendication précédente, où la tension appliquée à l'une desdites cellules alterne entre des valeurs qui rendent ledit filtre alternativement transmissif et opaque.

12. Filtre selon la revendication 11, où la tension appliquée à chaque cellule à cristaux liquides est une tension alternative symétrique ayant une première fréquence;

ladite alternance de la tension appliquée à la cellule entre des valeurs rendant le filtre transmissif et opaque est accomplie périodiquement à une fréquence secondaire; et

la seconde fréquence est bien plus faible que la première fréquence.

13. Filtre à lumière accordable selon la revendication 12, où la première fréquence est comprise entre 300 Hz et 300 kHz, et la seconde fréquence est comprise entre 10 Hz et 100 Hz.

14. Filtre à lumière accordable selon la revendication 6, où le retardateur biréfringent fixe est placé entre des polariseurs consécutifs dans le trajet du faisceau de lumière.

15. Filtre à lumière accordable selon la revendication 14, où ledit retardateur fixe est fait de quartz.

16. Filtre à lumière accordable selon la revendication 14, où ledit retardateur fixe est un film de polymère.

17. Dispositif de filtrage comprenant un filtre à lumière accordable selon toute revendication précédente, comprenant de plus;

un moyen pour diriger un faisceau collimaté de lumière à travers ladite pile de cellules et desdits polariseurs.

18. Dispositif de filtrage selon la revendication 17 comprenant de plus un moyen pour focaliser le faisceau collimaté émergeant de ladite pile de cellules et de polariseurs.

19. Dispositif de filtrage selon la revendication 17 ou 18, comprenant des première et seconde piles de cellules biréfringentes à cristaux liquides selon l'une quelconque des revendications 1 à 16, lesdites première et seconde piles étant disposées en relation parallèle et espacée et ledit moyen dirigeant dirigeant différentes portions du faisceau de lumière à travers lesdites première et seconde piles.

20. Dispostif de filtrage selon la revendication 19, comprenant un moyen modulateur pour permettre alternativement la transmission de la lumière le long de deux trajets comprenant les première et seconde piles, respectivement.

FIG. 1.

FIG. 2(a).

FIG. 2(b).

FIG. 2(c).

FIG. 2(d).

FIG. 3.

FIG. 4.

FIG. 5.

FIG. 6.

FIG. 7.

FIG. 8.

_FIG. 9._

_FIG. 10._

_FIG. 11._